# EUROPEAN PATENT APPLICATION

(11) **EP 1 321 872 A1**
(43) Date of publication of application: **25.06.2003**
(21) Application number: 01963484.9
(22) Date of filing: 06.09.2001
(51) Int. Cl.: G06F 17/60

(54) **COMPUTER NETWORK RISK CALCULATING METHOD, INSURANCE PROVIDING METHOD, VALUE EVALUATING METHOD**

(30) Priority: 07.09.2000 JP 2000271285; 07.09.2000 JP 2000271286
(71) Applicant: Zeon Information Systems Co., Ltd., Meguro-ku, Tokyo 153-0043 (JP)
(72) Inventor: TACHIBANA, Yoichi, Tokyo 153-0043 (JP); MATSUI, Shin, Toky 153-0043 (JP); FUKUSHIMA, Yoshiteru, Tokyo 153-0043 (JP)
(74) Representative: Billington, Lawrence Emlyn
(86) International application number: JP0107750
(87) International publication number: WO02021365

(57) **Abstract**

Provided are a risk calculation method for a computer network that enables a proper risk evaluation to be obtained for a network, and an insurance provision method using the risk calculation method, as well as a value evaluation method that can objectively evaluate the value of a computer network, and an investment value evaluation method for a computer network using the value evaluation method. Management information base (MIB) information in a computer network is acquired, the transition of the acquired MIB information is recorded, information on risks of halt of computer units or lines is extracted from the recorded transition information of the MIB information, the capability of a network is evaluated, the record of the state of maintenance/inspection of the network is inputted, the level of maintenance management is evaluated from the record, and a value at risk where the units or lines come to a halt is calculated from the evaluation of the network capability and from the evaluation of the level of maintenance management. The MIB information in a computer network is acquired, information on the activity ratio of a network and on the amount of data to be transmitted to the network is extracted from the acquired MIB information, the transitions thereof are recorded, future transition values of the activity ratio of the network and of the amount of data transmission are calculated from the recorded transition information, and the degree of customer's satisfaction with the network service company and of end-user using the service, is evaluated based on the calculated future transition values.

## Description

### TECHNICAL FIELD

The present invention relates to a risk calculation method, insurance provision method, and value evaluation method for computer networks.

### BACKGROUND ART

A virtual database (MIB: Management Information Base) is disposed on a system, which is subject to a network management, the virtual database being numbered and arranged on a tree such that management software (manager) effectively retrieves or sets management information. This MIB contains data that can implement a configuration management, fault management, and performance management required in managing a network. It is known that the state of use of a network can be diagnosed by the analysis of this data.

It has been also proposed for a network manager or a network consultant to carry out a performance management of a network based on the diagnosis.

In insuring a network, an premium has been so far determined only by the business status and reputation of a company managing a network. However, as the possibility of a network to be troubled and the business status of a network management company are not always linked, some insurance companies had to sign up an insurance contract at a cheap premium despite the company poorly managing a network.

On the other hand, even though the company sufficiently manages a network, some companies had to pay a high premium as a person insured, because of a small-scaled company.

Also, as a different aspect, stock prices of a network service company (provider, communication business company, etc.) and the business state of the company are not always linked. Stock prices could wildly fluctuate because of the mood in the market.

If stock prices are abnormally high even if the business state of the company is not satisfactory, there is a risk of the stock prices suddenly down. On the contrary, if stock prices are under-estimated despite the future prospect of the company being very bright, the company has the possibility of bearing profit by investment because of the stock prices soaring up.

Conventionally, whether the stock prices of the company are proper or not has so far been judged, based on quantitative financial information, including the information on financial safety such as the ratio of net worth to total capital and liquidity ratio, information on profitability, such as current profit ratio of sales and profit flow, information on possibility of future growth, such as ratio of current profit increase, and rate of net worth to total capital, and information on repayment ability, such as number of years for redemption of a debt and cash flow amount.

However, under the current state, only these financial indicators cannot provide a yardstick for measuring the stock prices of companies, which do not have the past track record, like venture corporations.

### DISCLOSURE OF THE INVENTION

In view of the above, an object of the present invention is to provide a risk calculation method for a computer network that enables a proper risk evaluation to be obtained for a network, and to provide an insurance provision method for a computer network using a reasonable discount insurance rate based on the proper risk evaluation.

Another object of the present invention is to provide a value evaluation method that can objectively evaluate the value of a computer network, and to provide an investment value evaluation method for a computer network using the value evaluation method.

In order to attain the above objects, a risk calculation method for a computer network of the present invention comprises acquiring management information base information in a computer network, and recording the transition of the acquired management information base information; extracting information on risks of halt of computer units or lines from the recorded transition information of the management information base information, and evaluating the capability of a network; inputting a record of the state of maintenance/inspection of the network, and evaluating the level of maintenance management from the record; and calculating a value at risk, where the units or lines come to a halt, from the evaluation of the capability of the network and from the evaluation of the level of maintenance management.

In order to achieve the above objects, an insurance provision method for a computer network of the present invention comprises acquiring management information base information in a computer network, and recording the transition of the acquired management information base information; extracting information on risks of halt of computer units or lines from the recorded transition information of the management information base information, and evaluating the capability of a network; inputting a record of the state of maintenance/inspection of the network, and evaluating the level of the maintenance management from the record; calculating a value at risk, where units or lines come to a halt, from the evaluation of the capability of the network and from the evaluation of the level of maintenance management; and finding a discount rate of premium based on the value at risk.

In order to accomplish the above objects, a value evaluation method for a computer network of the present invention comprises acquiring management information base information in a computer network; extracting from the acquired management information base information, information on the activity ratio of a network and on the amount of data to be transmitted to the network, and recording the transitions thereof; calculating from the recorded transition information, future transition values of the activity ratio of the network and of the amount of data transmission; and evaluating the degree of customer's satisfaction with the network based on the calculated future transition values.

In order to attain the above objects, an investment value evaluation method for a computer network using the value evaluation method for a computer network of the present invention comprises acquiring management information base information in a computer network; extracting from the acquired management information base information, information on the activity ratio of a network and on the amount of data to be transmitted to the network, and recording the transitions thereof; calculating from the recorded transition information, future transition values of the activity ratio of the network and of the amount of data transmission; evaluating the degree of customer's satisfaction with the network, based on the calculated future transition values; and estimating the investment value of the network based on the evaluation.

Preferably, the investment value evaluation method as an aspect of the present invention further comprises recording information such as stock prices contained in corporate financial statements of a user, manager, or owner of the network;
wherein the estimation of the investment value of the network is performed based on comparison between the recorded information such as stock prices contained in the corporate financial statements, and the evaluation of the degree of the customer's satisfaction with the network.

Features of the present invention will become more apparent from embodiments of the present invention which are described hereinbelow in conjunction with drawings.

### BRIEF DESCRIPTION OF DRAWINGS

Fig. 1 shows a configuration of a first embodiment of a computer network system in accordance with the present invention.
Fig. 2 shows a processing flow for describing processing procedure of a risk calculation method for a computer network in accordance with the present invention to be executed in a computer system 200.
Fig. 3 represents, of the acquired data, daily transition of the load factor on a CPU per diem for a network router 5.
Fig. 4 is a score chart for performing evaluation based on MIB information.
Fig. 5 shows a configuration of a second embodiment of a computer network system in accordance with the present invention.
Fig. 6 is a processing flow for describing processing procedure of a value evaluation method for a computer network in accordance with the present invention to be executed in a computer system 200'.
Fig. 7 is a diagram plotting the position of each company with the vertical axis representing band occupancy rate (%), and the horizontal axis representing the amount of data transmission.

### BEST MODE FOR CARRYING OUT THE INVENTION

Embodiments of the present invention will now be described with reference to the drawings. It is to be noted that the shown embodiments are given only for the purpose of understanding the present invention and that the applications of the present invention are not limited to such embodiments.

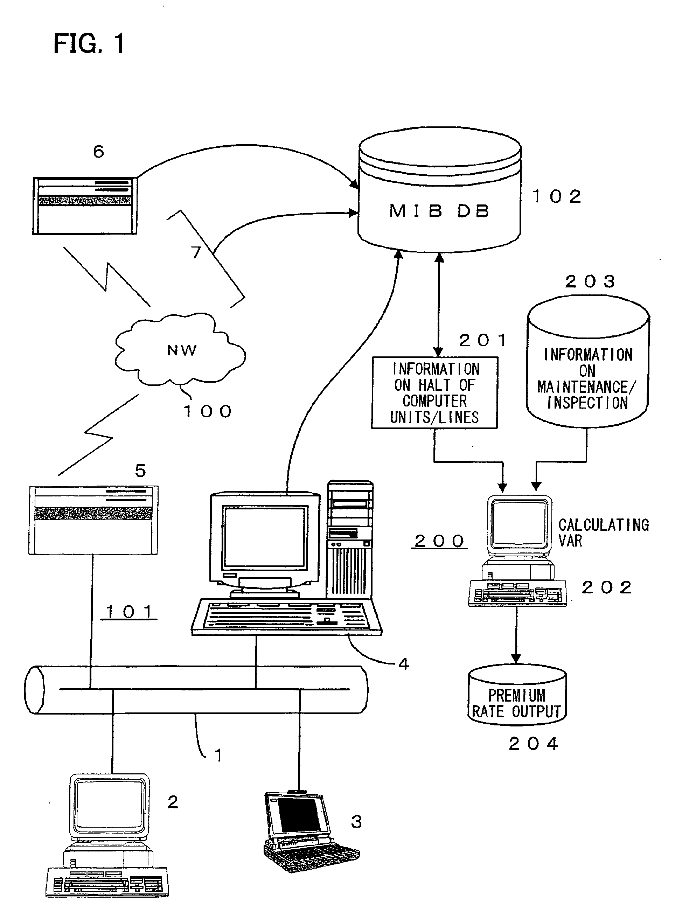

Fig. 1 is a diagram showing a configuration of a first embodiment of a computer network system in accordance with the present invention, and a WAN (Wide Area Network) managed by a network management company is formed with the computer network system.

Through a basic network 100, pluralities of LAN (Local Area Network) systems are connected. A plurality of computers 2 and 3, and a server 4 are connected to a LAN system 101, with the Ethernet 1. Each of the LAN systems is connected to the basic network 100 through routers 5 and 6.

A computer network system shown in Fig. 1 has a management information base (hereinafter referred to as "MIB", when necessary) 102 in its inside, which obtains each status of the server 4, the routers 5 and 6 and a line 7, and stores a MIB information.

The MIB information is a virtual database which is numbered and arranged on a tree such that management software (manager) efficiently retrieves and sets management information on a network management system. Generally, the MIB information is described in the ASN.1 language.

The manager side that manages and the agent side that is managed have a common MIB. Details of the management as to what and how the manager should perform to the agent are defined as an array of hierarchical figures.

The MIBs are classified into two separate types, one employing a network management protocol of the OSI (CHIP: Common Management Information Protocol), and the other employing a simple network management protocol (SNMP: Simple Network Management Protocol), and the MIB employing the SNMP is usually used. The RMON (Remote Network Monitoring MIB) type can be used.

Furthermore, in the MIBs, there are a standard MIB and an extended MIB. In the standard MIBs, there are a MIB1 defined by a RFC (Request for Comments) 1156, that is an Internet document, and a MIB2 defined by a RFC 1213, wherein the contents of the MIB1 are added and modified.

A risk calculation method for a computer network in accordance with the present invention uses a MIB information stored in a management information base 102 in such a computer network.

In Fig. 1, a computer system 200 is a system for calculating risks of a computer network in accordance with the present invention.

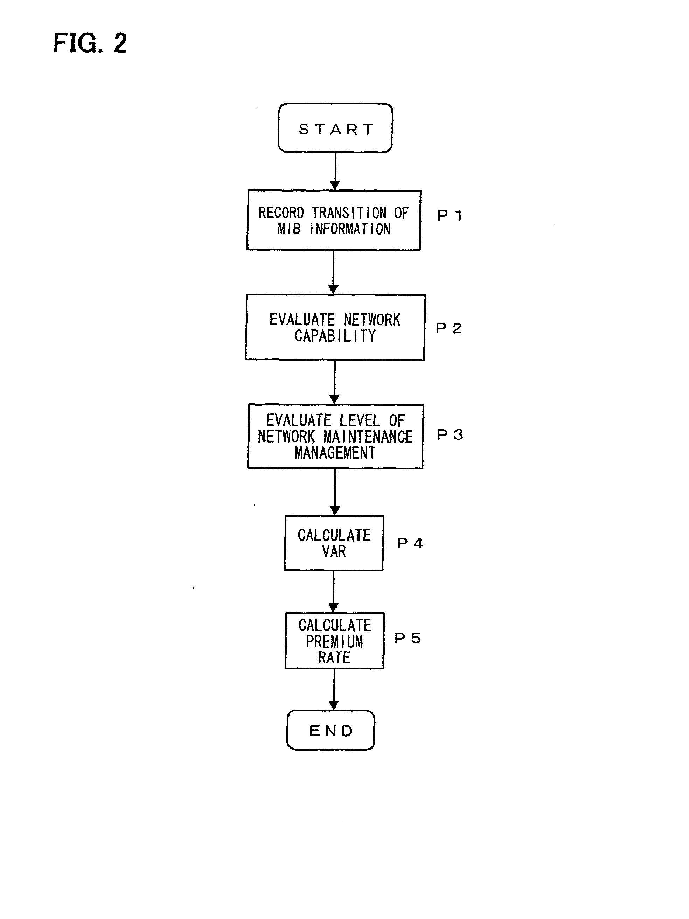

Fig. 2 shows processing flow for describing processing procedure of a risk calculation method for a computer network in accordance with the present invention to be executed in such a computer system 200.

Referring to Fig. 2, processing steps are described as follows. In the computer system 200, the MIB information as given in Table 1 is acquired from the MIB database 102, and the transition of the MIB information is recorded on a memory 201.

### (processing step P1)

For the standard MIB, a transport layer protocol (TCP: Transmission Control Protocol) with a connection-mode on a network, transport layer protocol (UDP: User Datagram Protocol) with a connectionless-mode only for data transmission, a protocol for controlling errors in the IP protocol (ICMP: Internet Control Message Protocol), and a management object are set, wherein the management object positions the IP protocol as an attribute group, for recognizing the operating status of each group.

Therefore, the network management status can be acquired by the analysis of these MIBs.

In order to know the internal status of a network from the MIB, the well-known MIB obtaining software (to be more specific, Network Health: Concord Corp., U.S., Proactive Network Monitoring Software) can be used, and in the processing step P1, the MIB information is acquired by this software. As MIB obtaining means, a FTP or e-mail can be used.

In other words, from the MIB information, in accordance with the following table, data is acquired as the information on dangers (occurrence probability) of computer units or line stopping, wherein the data to be acquired includes the number of errors occurred on LAN/WAN, number of stray packets, number of waste packets, activity ratio, amount of transmitting data, error ratio on LAN, number of broken packets, operating ratio, achievement ratio, delay ratio; number of re-transfers by the frame relay; load on CPU in router, degree of using memory, degree of using buffer; degree of using disk in server, load on CPU, degree of using memory; load on CPU in RAS, number of access checks from external end-user; and load on CPU for server, network and client caused by activating application.

Next, the transition of this MIB information is recorded (processing step P 1).

**(Table 1)**

| Network units | Data obtained from MIB | Meaing (When data value becomes large) |
|---|---|---|
| | Error occurring ratio | Network stops. |
| | Stray packet ratio | Processing slows down. |
| | Waste packet ratio | Processing slows down. |
| LAN/WAN | Activity ratio | Processing slows down. |
| | Packet broken ratio | Network stops. |
| | operating ratio | Units stop. |
| | Delay ratio | Processing slows down. |
| Router/ | Load factor on CPU | Processing slows down. |
| switch | Degree of using memory | Processing slows down. |
| | Degree of using buffer | Processing slows down. |
| | Degree of using disk | Network stops. |
| Server | Load factor on CPU | Processing slows down. |
| | Degree of using memory | Processing slows down. |
| Remote access | Load factor on CPU | Processing slows down. |
| server | Ratio of access check | Connection cannot be made. |
| (RAS) | from external end-user | |
| By activating | Load factor on server | Processing slows down. |
| application | Load factor on network | Processing slows down. |
| | Load factor on client PC | Processing slows down. |

The computer 202 extracts information on dangers (occurrence probability) of computer units or line stopping from the transition of the MIB information recorded on the memory 201, and evaluates the capability of a network (processing step P 2). The result of evaluating the capability of a network is stored in the memory 201, if necessary.

On the other hand, a manager performs maintenance and inspection on a computer network. The state of the maintenance and inspection is recorded on a memory 203. Therefore, the computer 202 is able to evaluate levels of the maintenance management from the state of maintenance and inspection recorded on the memory 203 (processing step P3).

Then, the computer 202 calculates a value at risk (hereinafter referred to as "VAR"), possibility of units or lines stopping, from the evaluation of network capability and evaluation of maintenance management (processing step P4).

As an application of the VAR, in accordance with the present invention, a discount rate to the premium is calculated based on the VAR, and as a result of calculation, a discount rate of premium can be acquired (processing step P 5).

### [Example]

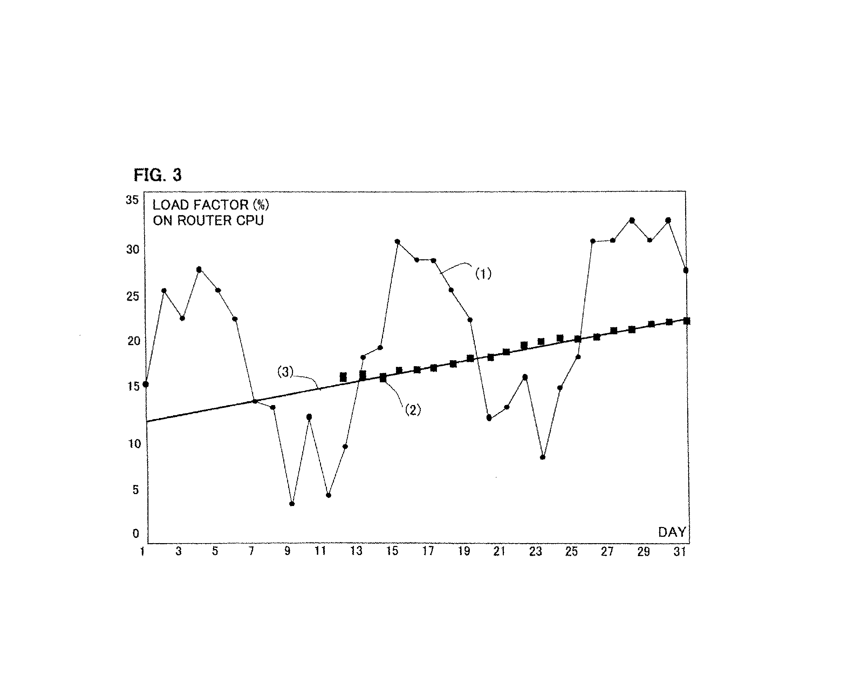

Fig. 3 represents daily transition of the load factor on a CPU per diem for a network router 5, out of the acquired data. Transition of the change in the measured data (1) extracted from the MIB information is shown here.

In the same manner as described above, transition of the data acquired from the MIB information is recorded, wherein the MIB information includes error occurrence ratio on WAN, error occurrence ratio on LAN, activity ratio of LAN or WAN, or achievement ratio of LAN or WAN.

The data acquired from the MIB information includes the information (meaning) on possible dangers of computer units or line stopping, as shown in the table 1.

Time series analysis is carried out on the recorded transition information with a statistical analysis or the method of moving average, and transition of each MIB data is predicted. From this prediction, a value (Δ value, increasing rate) is acquired, the value representing how far the MIB data would increase or decrease in the future.

In Fig. 3, predicted values (2) are acquired from a time series analysis with the method of moving average, and from these predicted values, an approximate straight line (y = 0.32×+ 12.2) (3) is acquired with the method of least squares, and then the increasing rate Δ value is acquired from the inclination of this straight line.

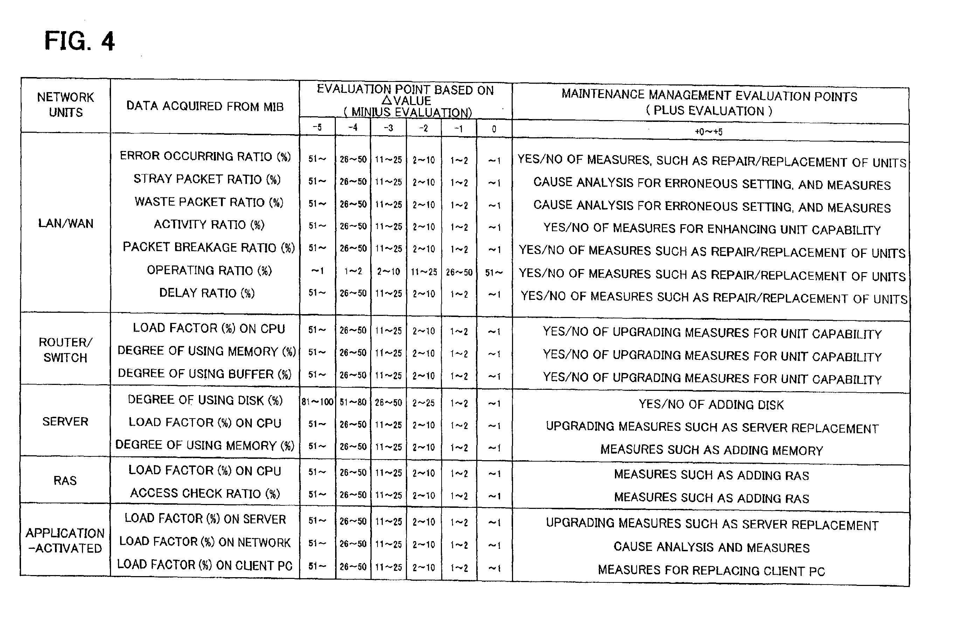

Based on the increasing rate Δ value, evaluation based on the MIB information is performed referring to a score chart shown in the table in Fig. 4.

In the embodiment of the present invention, as the inclination was 0.32, the increasing rate Δ value was 32%. Accordingly, the router load factor was valued at -4 points. The reason for the router load factor becoming higher is the increase in the number of router users. Unless appropriate network capability to meet the increasing number of users is provided for the router, processing speed would slow down, thereby causing troubles.

Similarly, as to another MIB data, the increasing rate Δ value is acquired, and evaluation points are calculated in the same manner as described above. In the embodiment of the present invention, the total points of the network evaluation (18 items) were -21. In the present invention, the number of items is not limited to that in the embodiment.

On the other hand, status as described below is evaluated; such as status of developing an infrastructure for the network, status of repairing/replacing units, status of monitoring the network capability, status of contracting with network consultants, etc. In the embodiment of the present invention, these items were valued at the range of +0 to +5 points.

Plus evaluations are made in the following cases: for example, +3 points, if a network manager daily manages the router CPU load factor, +3 points, if the router is planned to be replaced/added in the future, +4 points, if the router is under replacement or addition, or +1 point, if a contract being signed up with a net consultant.

In the embodiment of the present invention, +7 points were acquired, since these items such as daily management, plan to add router, and a contract with a net consultant, are met the requirements. As to the management status of another MIB data, evaluation points are calculated in the same manner as described above. In the embodiment of the present invention, the total points of the management status evaluation (18 items) were +41 points. Similarly, in the application of the present invention, the number of management status items is not limited to that cited above.

Then, the evaluation points based on the MIB information, and the evaluation points based on the management/repair information are added together. In the embodiment of the present invention, the added up points (-21+41 = 20 points) were regarded as the VAR value of the network.

The above-described method for obtaining the VAR value is not limited to the method used in the embodiment, and any of other well-known methods can be used for obtaining the VAR value.

From the VAR value, a grade of the network is determined. The following table 2 shows an example of the corresponding relations among the VAR value, grade and discount premium rate to the basic premium.

**(Table 2)**

| VAR value | Grade | Discount premium rate to the basic premium |
|---|---|---|
| +80 points or higher | 1 | 50% discount |
| 50 points or higher, less than 80 points | 2 | 40% discount |
| 25 points or higher, less than 50 points | 3 | 30% discount |
| 15 points or higher, less than 25 points | 4 | 20% discount |
| 5 points or higher, less than 15 points | 5 | 10% discount |
| 0 point or higher, less than 5 points | 6 | 0% discount |
| -5 points or higher, less than 0 point | 7 | 5% increase |
| -15 points or higher, less than -5 points | 8 | 10% increase |
| -25 points or higher, less than -50 points | 9 | 20% increase |
| Less than -50 points | 10 | 35% increase |

A discount rate for the premium is determined, depending on the grade of the network. For example, if the grade is 1, in short, if the maintenance and management of the network are highly evaluated, and the network capability is also valued at high points, the probability of trouble occurring to the network is low. That means the probability of paying the insured amount is low, as viewed from an insurance company. Therefore, the insurance company increases the discount rate of the premium, and reduces the premium.

On the contrary, if the grade is 10, in short, the maintenance and management of the network is valued at low points, and the network capability is also valued at low points, the probability of trouble occurring to the network is high, and the possibility of paying the insured amount is high. Therefore, an insurance company reduces a discount rate, or adds an extra charge for increasing the premium.

In the embodiment of the present invention, as the VAR value being 20 points, the network system can be insured with grade 4, and 20% discount of the basic premium.

The premium thus acquired is outputted to a file 204.

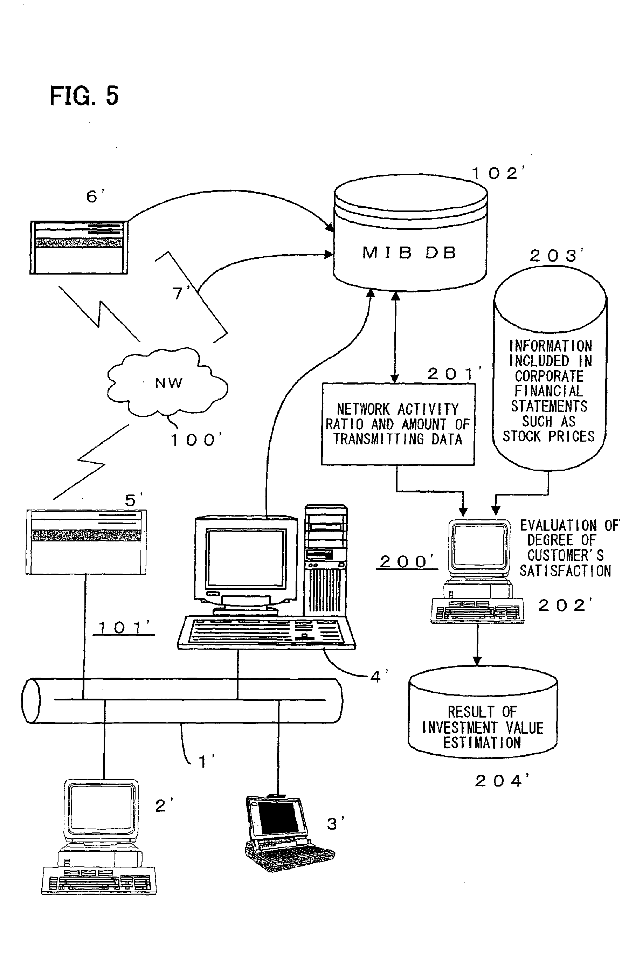

Next, a second embodiment of a computer network system in accordance with the present invention is described. Fig. 5 is a diagram showing a configuration of a second embodiment, and like the first embodiment, a WAN (Wide Area Network) managed by a network management company is configured.

In the figure, a basic network 100', a plurality of LAN systems 101' connected to that, the Ethernet 1' comprising the LAN system 101', computers 2' and 3', a server 4', and routers 5' and 6' are the same as those of the first embodiment shown in Fig. 1. Also, since a MIB database 102' and MIB information stored in that are the same as those in the first embodiment, here description is omitted.

A value evaluation method of a computer network in accordance with the present invention uses the MIB information stored in a management information base 102' in such a computer network.

In Fig. 5, a computer system 200' is a system for evaluating a value of a computer network in accordance with the present invention.

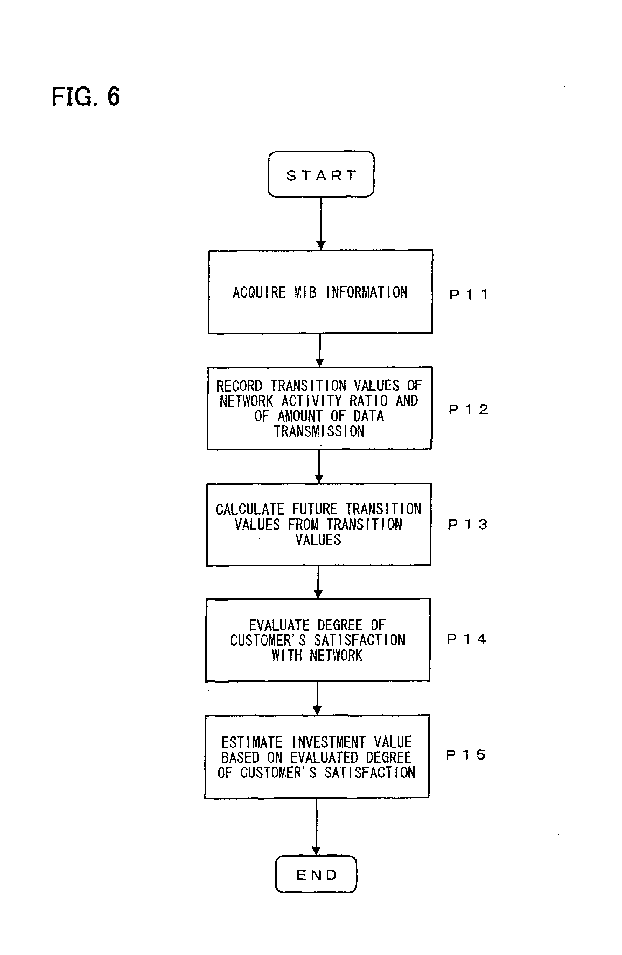

Fig. 6 shows processing flow for describing processing procedure of a value evaluation method of a computer network in accordance with the present invention to be executed in such a computer system 200'.

Referring to Fig. 6, processing steps are described below. In the computer system 200', the MIB information as shown in the Table 1 is acquired from the MIB database 102' to a memory 201' (processing step P11).

Next, a computer 202' extracts the network activity ratio and the amount of data transmission from the acquired MIB information.

As described above, since a management object is set to a standard MIB, wherein the management object positions the TCP, UDP, ICMP and IP protocols existing on a network, as attribute groups, for recognizing the operating state of each group, by the analysis of the MIBs, the network activity ratio and the amount of data transmission can be acquired with respect to the management status of a network.

Also, in order to know the state in the network from the MIB, the well-known MIB obtaining software, as described before, can be used, and in the processing step P11, this software obtains the MIB information.

In other words, the following data is acquired from the MIB information as the information on dangers (occurrence probability) of computer units or line stopping, in accordance with the table 1; the data including number of errors occurring on LAN/WAN, number of stray packets, number of waste packets, activity ratio, amount of transmitting data, error ratio on LAN, number of broken packets, operating ratio, achievement ratio, delay ratio; number of re-transfers by frame relay; load on CPU in router, degree of using memory, degree of using buffer; degree of using disk in server, load on CPU, degree of using memory; CPU load in RAS (remote access server), number of access checks from external end-user; and CPU load of server, network and client by activating application.

The transition values of the activity ratio of the network and the amount of data transmission extracted from these MIB information are recorded on the memory 201' (processing step P12).

From the transition information on the activity ratio of the network and amount of transmitting data recorded on the memory 201', the computer 202' calculates the future transition values (processing step P13). From the calculated future transition values of the activity ratio of the network and amount of transmitting data, the computer further finds an evaluation of a degree of customer satisfaction (processing step P14).

On the other hand, the information included in the financial statements of the company, which is an owner of a computer network, such as the company's stock prices information is recorded on a memory 203'.

Therefore, from the degree of customer satisfaction previously acquired by the computer 202' and the stock price information recorded on the memory 203', the investment value to the company possessing the network system is estimated, and outputted to a file 204' (processing step P15).

### (Example)

As described above, out of the acquired data, Fig. 3 shows daily'transition of the load factor on the CPU for the network router 5 per diem, and also shows transition of change in the measured data (1) extracted from the MIB information.

In the same manner as described above, transition of the data, such as degree of using disk, degree of using memory, or degree of using buffer is recorded. The CPU activity ratio and degree of using disk denote the activity ratio of the network.

The above-described recorded transition information is analyzed in terms of time series with a statistical analysis or the method of moving average, to predict transition of each MIB data. In Fig. 3, as to the data of a certain company (G company), predicted values (2) are acquired from the time series analysis with the method of moving average. The predicted values (2) are performed on each company possessing a network.

Next, from the predicted values (2), an approximate straight line (y = 0.32×+12.2) (3) is acquired with the least squares method, and from the inclination of this straight line, Δvalue (changing ratio of predicted values) is acquired. The increase in the network activity ratio slows the operation of the network. If units or lines are used exceeding their specific capabilities, the possibility of the units or lines stopping becomes high. Should operations slow down, or stop, a degree of customer satisfaction becomes low.

Like the risk calculation as described above, a degree of customer satisfaction is evaluated based on the Δvalue, referring to the score chart shown in Fig. 4. In the embodiment of the present invention, as the inclination was 0.32, the Δ value was 32%. Accordingly, the router load factor is evaluated at -4 points.

The reason for the router load factor becoming higher is the increase in the number of router users. Unless an appropriate capability to meet the number of users is provided for the router, processing speed would slow down, thereby causing troubles.

As to other MIB data, Δvalue is acquired, and evaluation points are calculated in the same manner as described above. In the embodiment of the present invention (G company), the average points of the network evaluation (18 items) were -1.2 points.

Here, the number of items is not limited in the application of the present invention. In the present invention, similar to the risk calculation, several states of the network, such as state of completing infrastructure of the network, state of repairing/replacing units, state of monitoring the capability of the network, and state of contracting a network consultant are preferably evaluated.

In this example, the evaluation points were +7 points, since the items including daily management, additional router installation plan, and contract with a network consultant satisfy the requirements. As to the management status regarding other MIB data, evaluation points are calculated in the same manner as described above. In the embodiment of the present invention, the average points of the management status evaluation (18 items) were +0.9 points. Here, the number of items is not limited in the application of the present invention.

On the other hand, transitions of data, such as the amount of data transmission, number of access checks are recorded. These transition data represent the usefulness of the information inside the network.

The increase in the amount of data transmission is caused by attempts to take out the abundant information existing in the network. The increase in the amount of data transmission means that a large number of users can frequently use valuable information, and thus a degree of customer satisfaction is enhanced.

As to the amount of data transmission, transition is predicted in the same manner as mentioned above, and Δvalue (amount of increase per day) is acquired.

Table 3 shows an example of evaluation chart corresponding to Δvalue of the amount of data transmission. In the embodiment of the present invention (G company), when the amount of data transmission is 56 bytes/day, the evaluation points are +5 points.

**(Table 3)**

| Network units | Data obtained from MIB | Evaluation points based on Δvalue (Plus evaluation) | | | | | |
|---|---|---|---|---|---|---|---|
| | | +5 | +4 | +3 | +2 | +1 | +0 |
| LAM/WAN | Amount of transmitting data (Byte) | 50∼ | 30∼49 | 15∼29 | 10∼14 | 5∼9 | ∼4 |

The evaluation points based on the activity ratio of the network and the amount of data transmission, and evaluation points regarding the maintenance and management are added up to evaluate a degree of customer satisfaction. In the embodiment of the present invention, a degree of customer satisfaction is evaluated from the equation, -1.2 + 0.9 + 5 = 4.7 points.

As described above, the degree of customer's satisfaction with the network can be objectively evaluated from the MIB. This evaluation method is an example, and evaluation can be made by other standards. Also, a data mining technique can be employed, wherein the data mining technique is for examining the correlation between data-to-data, that seem to have no relation at first glance, with the recursive method or statistical method. As data mining tools, for example, "Clementine" released from SPSS Corporation is commercially available.

By this evaluation method, other network service companies (competitive companies) are evaluated in the same manner as described above, and the positioning of G company in the network service industry is grasped. In short, each network service company is evaluated by the method described above, and average points and a degree of distribution are calculated, and then from the average points and the degree of distribution, the deviation value of the evaluated points for G company is acquired. Thus the value of G company can be evaluated further objectively.

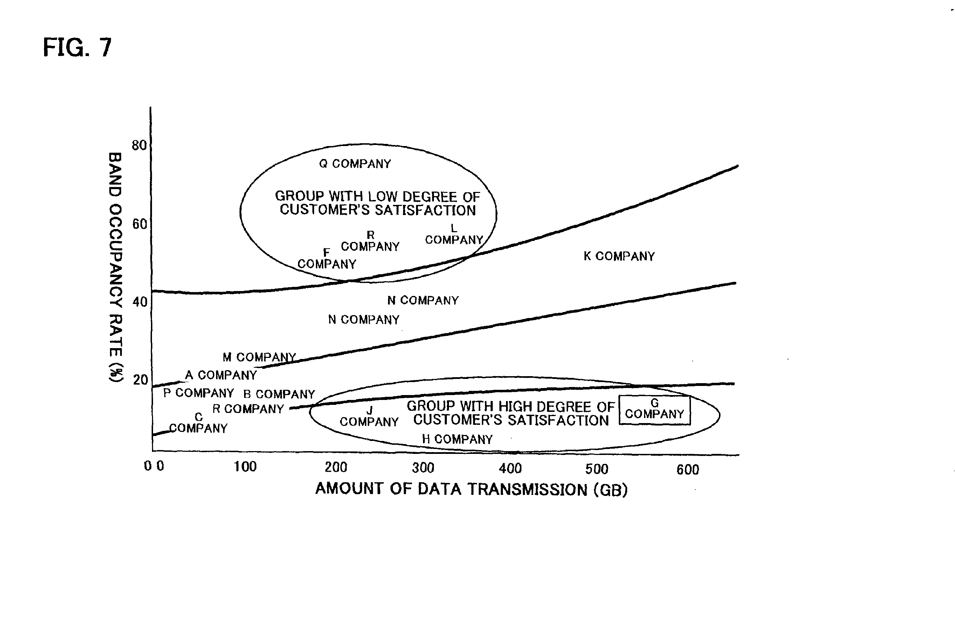

Fig. 7 is a diagram showing such a state of positioning, and the figure plots the positioning of each company, with a vertical axis representing the band occupancy rate (%), and with a horizontal axis representing the amount of data transmission.

From this figure, it can be understood that G, H and J companies ensure a high degree of customer satisfaction, since they can secure low band occupancy rate instead of large data amount because they use a wide line network. On the other hand, L, F, Q and R companies have too high band occupancy rate because they use a narrow line network. A degree of using is lower than the average, and a degree of customer satisfaction is low.

In addition, in an investment method of the present invention, transition of stock prices of a network owner is recorded on the memory 203'.

If the recorded stock price is positioned higher than the position of the degree of customer satisfaction, when the individual positions in the network service industry are compared, between the position of the degree of customer satisfaction evaluated by the value evaluation method, and the position of the stock price, there is a high possibility that the company is overestimated. On the contrary, if the stock price is positioned lower than the position of the degree of customer satisfaction, the company can be regarded as having a high possibility of being underestimated.

For example, when the deviation value A of G company's stock price is acquired from the average and distribution of the stock price of each network service company, while the deviation value B of the evaluated degree of customer satisfaction based on the MIB information is acquired, and if the difference of the deviation values (A-B) is large in a plus direction, the company can be regarded as having a tendency of being overestimated compared to the actual business performance or having a tendency of being underestimated compared to the actual business performance, if the difference is large in a minus direction. By this procedure, whether G company deserves investment value or not can be judged objectively. Although in the example, stock price is used for judging investment value, other information included in the financial statements of the company may be used.

### INDUSTRIAL APPLICABILITY

According to the methods of the present invention, whose embodiments have been set forth hereinabove with reference to the drawings, the capability of a network, and possibilities of troubling a network can be accurately estimated. By this estimation, risks of a network are judged, and reasonable discount rate of premium can be calculated, thus the stability and reliability of insurance against damage can be improved.

Also, according to the methods of the present invention, the degree of customer's satisfaction with a network can be objectively judged, and investment value of that network can be evaluated. Therefore, by the combination with the traditionally well-known financial indicator, the investment amount can be determined.

## Claims

1. A risk calculation method for a computer network, comprising:
acquiring management information base information in a computer network, and recording the transition of the acquired management information base information;
extracting information on risks of halt of computer units or lines from the recorded transition information of the management information base information, and evaluating the capability of a network;
inputting a record of the state of maintenance/inspection of the network, and evaluating the level of maintenance management from the record; and
calculating a value at risk, where the units or lines come to a halt, from the evaluation of the capability of the network and from the evaluation of the level of maintenance management.

2. An insurance provision method for a computer network, comprising:
acquiring management information base information in a computer network, and recording the transition of the acquired management information base information;
extracting information on risks of halt of computer units or lines from the recorded transition information of the management information base information, and evaluating the capability of a network;
inputting a record of the state of maintenance/inspection of the network, and evaluating the level of the maintenance management from the record;
calculating a value at risk, where units or lines come to a halt, from the evaluation of the capability of the network and from the evaluation of the level of maintenance management; and
finding a discount rate of premium based on the value at risk.

3. A value evaluation method for a computer network, comprising:
acquiring management information base information in a computer network;
extracting from the acquired management information base information, information on the activity ratio of a network and on the amount of data to be transmitted to the network, and recording the transitions thereof;
calculating from the recorded transition information, future transition values of the activity ratio of the network and of the amount of data transmission; and
evaluating the degree of customer's satisfaction with the network based on the calculated future transition values.

4. An investment value evaluation method for a computer network, comprising:
acquiring management information base information in a computer network;
extracting from the acquired management information base information, information on the activity ratio of a network and on the amount of data to be transmitted to the network, and recording the transitions thereof;
calculating from the recorded transition information, future transition values of the activity ratio of the network and of the amount of data transmission;
evaluating the degree of customer's satisfaction with the network, based on the calculated future transition values; and
estimating the investment value of the network based on the evaluation.

5. The investment value evaluation method for a computer network according to claim 4, further comprising:
recording information such as stock prices contained in corporate financial statements of a user, manager, or owner of the network;
wherein the estimation of the investment value of the network is performed based on comparison between the recorded information such as stock prices contained in the corporate financial statements, and the evaluation of the degree of the customer's satisfaction with the network.
